# EUROPÄISCHE PATENTSCHRIFT

(11) **EP 1 900 341 B1**
(45) Veröffentlichungstag und Bekanntmachung des Hinweises auf die Patenterteilung: **04.05.2011**
(21) Anmeldenummer: 06120608.2
(22) Anmeldetag: 13.09.2006
(51) Int. Cl.: A61C 13/00, A61C 13/09

(54) **Mehrfarbiger Formkörper**
Multicolored moulded body
Corps moulé multicolore

(43) Veröffentlichungstag der Anmeldung: 19.03.2008
(73) Patentinhaber: Ivoclar Vivadent AG, 9494 Schaan (LI)
(72) Erfinder: Rheinberger, Dr., Volker, FL-9490, Vaduz (LI); Schweiger, Marcel, 7000, Chur (CH); Kruse, Dr., Robert, 6800, Feldkirch (AT); Kerschbaumer, Harald, 6833, Klaus (AT)
(74) Vertreter: UEXKÜLL & STOLBERG

(56) Entgegenhaltungen:
- EP-A- 1 354 567
- EP-A- 1 400 232
- EP-A2- 0 442 150
- US-A- 5 308 243
- US-A- 5 800 164

## Beschreibung

Die Erfindung betrifft einen mehrfarbigen Formkörper mit aufeinander gelagerten Schichten, der insbesondere zur Herausarbeitung von Dentalrestauration geeignet ist und bei dem der Farbübergang zwischen den einzelnen Schichten ohne technische Hilfsmittel nicht wahrzunehmen ist.

Dentalrestaurationsteile, wie im EP1345467, können aus Formkörpern, beispielsweise keramischen oder Kunststoffformkörpern, herausgearbeitet werden. Dieses Herausarbeiten erfolgt meist maschinell, beispielsweise computergestützt nach einem CAD/CAM-Verfahren. Im Hinblick auf die spätere Verwendung der Dentalrestaurationsteile sollten bereits die Formkörper bestimmte ästhetische Eigenschaften aufweisen.

Natürliche Zähne sind nicht einfarbig, sondern haben eine komplexe Farbgebung. Verschiedene Bereiche desselben Zahns können sich in ihrer Farbe und ihrer Transparenz voneinander unterscheiden. Im Allgemeinen zeigen Zähne einen Farb- und Transparenzverlauf von transparent im okklusalen Bereich bis gelblich opak im zervikalen Bereich.

Zur Erzielung einer gewünschten Farbgebung können einfarbige Dentalrestaurationsteile nachträglich verblendet werden. Eine solche Verblendung muss jedoch üblicherweise aufwendig manuell durchgeführt werden. Daher werden mehrfarbige Formkörper bevorzugt, aus denen Dentalrestaurationsteile hergestellt werden können, die ohne Verblendung ästhetischen Ansprüchen gerecht werden und eine Farbgebung aufweisen, die in Farbe und Transparenz sowie Farbverlauf den natürlichen Zähnen möglichst nahe kommt.

Aus dem Stand der Technik sind mehrfarbige Formkörper bekannt, die aus mehreren unterschiedlich gefärbten Schichten aufgebaut sind.

So bietet die Fa. VITA Zahnfabrik GmbH die VITABLOCS® Triluxe an, die aus drei unterschiedlich gefärbten Schichten einer Feldspatkeramik bestehen und die Herstellung optisch ansprechender dentaler Restaurationsteile einfacher gestalten sollen. Diese Restaurationsteile werden jedoch nach wie vor verblendet.

Die US 5,151,044 beschreibt mehrschichtige Blöcke aus Kunststoffmaterialien, die zur Herstellung von künstlichen Zähnen oder Zahnersatzteilen verwendet werden können. Diese Blöcke enthalten bevorzugt bis zu drei unterschiedlich gefärbte Schichten, um den Farbverlauf natürlicher Zähne nachzubilden.

Weiterhin ist aus der DE 199 44 130 A1 bekannt, zur Herstellung von Zahnersatzteilen mittels CAD/CAM-Verfahren Blöcke aus mehreren unterschiedlich gefärbten Schichten mit standardisierten optischen Eigenschaften zu verwenden. Dabei wird die virtuelle Positionierung des Restaurationsteils innerhalb eines Blockes so optimiert, dass der Farbverlauf des späteren Restaurationsteils einem entsprechenden natürlichen Zahn des Patienten möglichst nahe kommt. Auf eine Verblendung der so hergestellten Restaurationsteile soll verzichtet werden können.

Allerdings sind bei den bekannten mehrfarbigen Formkörpern, die aus unterschiedlich gefärbten Schichten aufgebaut sind, die Farbgrenzen zwischen den einzelnen Schichten deutlich sichtbar. Daher müssen die nach dem Stand der Technik hergestellten Restaurationsteile wie bisher verblendet werden, um eine hohen ästhetischen Ansprüchen genügende Restauration zu erhalten.

Die DE 197 14 178 A1 beschreibt ein Verfahren zur Herstellung eines mehrfarbigen Formkörpers, bei dem die Farbgrenzen zwischen den einzelnen Schichten nicht sichtbar sein sollen. Danach werden die Kontaktflächen der einzelnen Schichten mit Druck beaufschlagt und die unterschiedlich gefärbten Ausgangsmaterialien im Grenzbereich in innigen Kontakt gebracht, um so eine Vermischung der Ausgangsmaterialien erreichen zu können.

Die Praxis hat jedoch gezeigt, dass dieses Verfahren zu keiner ausreichenden Vermischung führt und daher die Grenzen der Farbschichten in den so hergestellten Formkörpern und Restaurationsteilen mit bloßem Auge sichtbar bleiben.

Es besteht daher ein Bedarf an einem mehrfarbigen Formkörper zur Herstellung von Dentalrestaurationen mit unterschiedlich gefärbten Schichten, bei dem zwischen den einzelnen Schichten mit bloßem Auge keine Farbgrenzen zu erkennen sind.

Diese Aufgabe wird überraschenderweise durch den mehrfarbigen Formkörper gemäß den Ansprüchen 1 bis 15 gelöst. Die Erfindung betrifft außerdem ein Verfahren zur Herstellung des mehrfarbigen Formkörpers gemäß Anspruch 16 und die Verwendung des mehrfarbigen Formkörpers gemäß den Ansprüchen 17 bis 19.

Die Begriffe "Farbe" und "gefärbt" im Sinne der Erfindung beziehen sich auf die Farbe, die Helligkeit und die Transluzenz eines Materials, eines Körpers oder einer Schicht. Erfindungsgemäß beziehen sich die Begriffe "Farbe" und "gefärbt" insbesondere auf die Helligkeit. Daher werden unter den Änderungen der Farben insbesondere Änderungen der Helligkeit verstanden.

"Transluzenz" ist die Lichtdurchlässigkeit eines Materials, eines Körpers oder einer Schicht, d.h. das Verhältnis von durchgelassener zu einfallender Lichtintensität.

Farben können beispielsweise auch durch ihren Lab-Wert oder durch einen in der Dentalindustrie gängigen Farbschlüssel charakterisiert werden. Beispiele für solche Farbschlüssel sind der Vitapan classical® und der Vita 3D Master®, beide von der VITA Zahnfabrik H. Rauter GmbH & Co. KG, und der Chromascop® der Ivoclar Vivadent AG.

Messungen von Schichtdicken können beispielsweise an senkrecht zur Schichtung aus einem Formkörper gesägten und polierten Schnitten erfolgen, indem an einem Stereoskop skalierte Mikroskopbilder dieser Schnitte aufgenommen und an diesen Aufnahmen Längenmessungen, z.B. mit dem Bildverarbeitungsprogramm analySIS Five, durchgeführt werden. Insbesondere wird unter der Schichtdicke der Mittelwert mehrerer für eine Schicht bestimmter Dicken verstanden.

Der erfindungsgemäße mehrfarbige Formkörper mit aufeinander gelagerten Schichten zeichnet sich dadurch aus, dass er
(a) mindestens zwei aufeinander folgende und unterschiedlich gefärbte Hauptschichten und
(b) zwischen mindestens zwei aufeinander folgenden und unterschiedlich gefärbten Hauptschichten mindestens zwei unterschiedlich gefärbte Zwischenschichten aufweist,
wobei zwischen den Zwischenschichten die Änderung der Farbe in einer Richtung erfolgt, die der Richtung der Änderung der Farbe zwischen den Hauptschichten entgegengesetzt ist.

Die Änderung der Farben kann dabei insbesondere im Wesentlichen in einer Änderung ihrer jeweiligen Helligkeit bestehen. In einer bevorzugten Ausführungsform zeichnet sich daher der erfindungsgemäße Formkörper dadurch aus, dass zwischen den Zwischenschichten die Zunahme der Helligkeit in einer Richtung erfolgt, die der Richtung der Zunahme der Helligkeit zwischen den Hauptschichten entgegengesetzt ist.

Es hat sich gezeigt, dass bei erfindungsgemäßen Formkörpern überraschenderweise die Farbgrenzen zwischen unterschiedlich gefärbten Hauptschichten mit dem bloßen Auge praktisch nicht wahrnehmbar sind.

Es wurde auch erkannt, dass die deutliche Wahrnehmbarkeit der Farbgrenzen zwischen einzelnen Schichten bei bisher bekannten Formkörpern durch eine optische Täuschung verstärkt wird.

Beim Betrachten benachbarter Flächen mit unterschiedlicher Farbe oder Helligkeit kommt es im menschlichen Auge zur sogenannten lateralen Hemmung benachbarter Rezeptoren in der Netzhaut. Dadurch erscheint im Grenzbereich zweier unterschiedlich gefärbter Flächen die dunkle Fläche dunkler als in von der Grenzfläche weiter entfernten Bereichen, die helle Fläche dagegen heller als in von der Grenzfläche weiter entfernten Bereichen. Die dabei vom menschlichen Auge wahrgenommenen kontrastreicheren Übergänge werden als Mach'sche Streifen bezeichnet. Durch diesen Effekt wird der Kontrast an der Farbgrenze erhöht und die Wahrnehmung der Farbgrenze verstärkt. Aufgrund dieses Effektes wird in einer Abfolge unterschiedlich gefärbter Schichten, die jeweils in sich einfarbig sind, innerhalb der einzelnen Schichten ein Farbgradient wahrgenommen, der dem Gradienten der Farben der einzelnen Schichten entgegengesetzt ist. Diese Effekte werden bei helleren Farben stärker wahrgenommen als bei dunkleren Farben.

Die beschriebenen optischen Effekte laufen dem bei Dentalrestaurationen gewünschten Ziel eines möglichst natürlichen Farbverlaufs zuwider, so dass bei den bekannten mehrfarbigen Formkörpern die Farbgrenzen zwischen den Schichten deutlich wahrnehmbar sind. Bei den erfindungsgemäßen Formkörpern werden diese Effekte hingegen durch das Einfügen von speziell ausgestalteten Zwischenschichten kompensiert oder sogar überkompensiert und dadurch ein Farbverlauf erzielt, bei dem die Grenzen der unterschiedlich gefärbten Schichten mit dem bloßen Auge nicht mehr wahrgenommen werden können.

Gegenstand einer bevorzugten Ausführungsform der Erfindung ist ein mehrfarbiger Formkörper, bei dem die zwischen zwei aufeinander folgenden und unterschiedlich gefärbten Hauptschichten liegenden Zwischenschichten alternierend die Farben dieser Hauptschichten haben. Dadurch kann ein gewünschter Farbverlauf, bei dem die Farbgrenzen praktisch nicht wahrzunehmen sind, unter Verwendung relativ weniger Farben erzielt werden.

Eine besonders bevorzugte Ausführungsform besteht in einem mehrfarbigen Formkörper, bei dem zwischen zwei aufeinander folgenden und unterschiedlich gefärbten Hauptschichten genau zwei Zwischenschichten angeordnet sind und jede dieser Zwischenschichten die Farbe der Hauptschicht hat, die an die jeweils andere Zwischenschicht angrenzt.

Demgemäß ist auch ein solcher Formkörper bevorzugt, der mindestens ein Element von vier aufeinander gelagerten Schichten aufweist, wobei
(a) die erste Schicht eine erste Hauptschicht;
(b) die zweite Schicht eine Zwischenschicht mit der Farbe der zweiten Hauptschicht;
(c) die dritte Schicht eine Zwischenschicht mit der Farbe der ersten Hauptschicht; und
(d) die vierte Schicht eine zweite Hauptschicht ist.

Bei erfindungsgemäßen Formkörpern beträgt die Summe von Haupt- und Zwischenschichten mindestens vier, d.h. es liegen mindestens zwei Hauptschichten und mindestens zwei Zwischenschichten vor. Bevorzugt haben die erfindungsgemäßen Formkörper 4 bis 20, insbesondere 4 bis 10 und besonders bevorzugt 4 bis 8 Haupt- und Zwischenschichten.

Die Kontrasterhöhung, die in Abwesenheit von Zwischenschichten an den Grenzen der Hauptschichten auftritt, ist je nach Transluzenz und Helligkeit der beteiligten Schichten unterschiedlich stark ausgeprägt. Daher ist bei Formkörpern mit mehr als zwei Hauptschichten nicht unbedingt an jeder Grenze zwischen zwei Hauptschichten die Einfügung von Zwischenschichten notwendig. So kann eine Dentalrestauration, die hohen ästhetischen Ansprüchen genügt, aus einem wirtschaftlich herstellbaren Formkörper gefertigt werden.

In einer bevorzugten Ausführungsform weist ein erfindungsgemäßer Formkörper acht aufeinander gelagerte Schichten auf, wobei
(a) die erste Schicht eine erste Hauptschicht;
(b) die zweite Schicht eine zweite Hauptschicht;
(c) die dritte Schicht eine Zwischenschicht mit der Farbe der dritten Hauptschicht;
(d) die vierte Schicht eine Zwischenschicht mit der Farbe der zweiten Hauptschicht;
(e) die fünfte Schicht eine dritte Hauptschicht;
(f) die sechste Schicht eine Zwischenschicht mit der Farbe der vierten Hauptschicht;
(g) die siebte Schicht eine Zwischenschicht mit der Farbe der dritten Häuptschicht; und
(h) die achte Schicht eine vierte Hauptschicht ist.

Bevorzugt hat ein erfindungsgemäßer Formkörper eine Höhe von 10 mm bis 20 mm, besonders bevorzugt von 14 mm bis 16 mm.

Die Hauptschichten des erfindungsgemäßen Formkörpers haben eine Dicke von mehr als 0,5 mm, insbesondere mehr als 0,5 mm und bis 15 mm, bevorzugt mehr als 0,5 mm und bis 10 mm und besonders bevorzugt 0,7 mm bis 8 mm.

Die Zwischenschichten des erfindungsgemäßen Formkörpers haben eine Dicke von 0,1 mm bis 0,5 mm und besonders bevorzugt 0,2 mm bis 0,4 mm.

Ein erfindungsgemäßer Formkörper kann aus beliebigen zur Herstellung von Formkörpern für Dentalrestaurationen geeigneten Materialien bestehen. Bevorzugte Materialien sind Keramiken, Glaskeramiken, Kunststoffe, anorganisch-organische Komposite oder Mischungen davon.

Besonders bevorzugt ist ein Formkörper, der (a) SiO₂, (b) Al₂O₃ und (c) K₂O und/oder Na₂O enthält.

Unterschiedlich gefärbte Schichten können das gleiche Material aufweisen, das jeweils unterschiedlich eingefärbt ist, oder unterschiedliche Materialien aufweisen.

Die Schichtung der Formkörper orientiert sich vorzugsweise an der Schichtung der in der Dentalindustrie gängigen Farbschlüssel, wie z.B. der Vitapan classical® oder der Vita 3D Master®, beide von der VITA Zahnfabrik H. Rauter GmbH & Co. KG, oder dem Chromascop® der Ivoclar Vivadent AG. Die Zahnmodelle dieser Farbschlüssel definieren jeweils nur eine Farbe, sind aber zähnähnlich aus Schichten unterschiedlicher Materialmischungen und/oder Farben bzw. Transluzenzen aufgebaut und an die unterschiedlichen Farben der menschlichen Zähne angelehnt. Bevorzugt wird diese grundsätzliche Farbzuordnung auch bei den erfindungsgemäßen Formkörpern eingehalten, so dass die daraus hergestellten dentalen Restaurationen weitestgehend dem natürlichen Zahn entsprechen.

Die Erfindung ist auch gerichtet auf einen anderen mehrfarbigen Formkörper zur Herausarbeitung dentaler Restaurationen, der
(a) mindestens zwei aufeinander folgende und unterschiedlich gefärbte Hauptschichten und
(b) zwischen mindestens zwei aufeinander folgenden und unterschiedlich gefärbten Hauptschichten eine Zwischenschicht aufweist,
wobei die Zwischenschicht eine Mischung der Materialien der beiden aufeinander folgenden Hauptschichten enthält, vorzugsweise daraus besteht.

Die Hauptschichten dieses anderen erfindungsgemäßen Formkörpers haben eine Dicke von mehr als 0,5 mm, insbesondere mehr als 0,5 mm und bis 15 mm, bevorzugt mehr als 0,5 mm und bis 10 mm und besonders bevorzugt 0,7 mm bis 8 mm.

Die Zwischenschicht dieses anderen erfindungsgemäßen Formkörpers hat eine Dicke von 0,1 mm bis 0,5 mm und besonders bevorzugt 0,2 mm bis 0,4 mm.

Weitere bevorzugte Ausführungsformen dieses anderen erfindungsgemäßen Formkörpers haben die Eigenschaften im Hinblick auf bevorzugte Anzahlen von Schichten, bevorzugte Höhen des Formkörpers und bevorzugte Materialien wie für die übrigen Ausführungsformen weiter oben beschrieben.

Die Erfindung betrifft auch ein Verfahren zur Herstellung der erfindungsgemäßen mehrfarbigen Formkörper mit aufeinander gelagerten Schichten, umfassend die Schritte
(a) Aufeinanderlagern der Hauptschichten und Zwischenschicht(en),
(b) Trockenpressen und
(c) Entbindern und Sintern,
wobei die Hauptschichten und die Zwischenschicht (en) so aufeinander gelagert werden, dass ein erfindungsgemäßer Formkörper erhalten wird.

Schließlich betrifft die Erfindung auch die Verwendung der erfindungsgemäßen mehrfarbigen Formkörper zur Herstellung dentaler Restaurationen. Dabei kann die Herstellung dentaler Restaurationen computergestützt, insbesondere mittels CAD/CAM-Verfahren, durchgeführt werden. Bevorzugte dentale Restaurationen sind künstliche Zähne, Inlays, Onlays, Brücken und Kronen.

Die Erfindung wird im folgenden anhand von Beispielen näher erläutert.

### Beispiele

### Beispiel 1 - Zwei Zwischenschichten

Für die Herstellung eines mehrfarbigen Formkörpers aus unterschiedlich eingefärbten Schichten werden nachstehende Materialien (Glaskeramik-Pulver) verwendet:

| | |
|---|---|
| SiO₂: | 60,0 - 65,0 % |
| Al₂O₃: | 16,0 - 20,0 % |
| K₂O: | 10,0 - 14,0 % |
| Na₂O: | 3,5 - 6,5 % |
| B₂O₃: | 0 - 1,0 % |
| BaO: | 0 - 1,5 % |
| CaO: | 0.5 - 2,5 % |
| CeO₂: | 0 - 1,0 % |
| TiO₂: | 0 - 0,5 % |
| F: | 0 - 0,5 % |
| Pigmente: | 0,2 - 1,0 % |

Durch entsprechende Pigmentzugabe werden die Einfärbungen M1 und M2 des Glaskeramikmaterials hergestellt, wobei M1 zum Beispiel der Dentinfarbe A2 nach Vitanpan classical® entspricht und eine hohe Opazität aufweist und M2 einer Schneidefarbe entspricht, und eine niedrigere Opazität aufweist. Durch unterschiedliche Abmischung der Materialien M1 und M2 ergeben sich vier unterschiedlich gefärbte Materialzusammensetzungen A bis D, die wie folgt zusammengesetzt sind:

| | |
|---|---|
| Material A: | 100% M1 |
| Material B: | 2/3 M1, 1/3 M2 |
| Material C: | 1/3 M1, 2/3 M2 |
| Material D: | 100% M2 |

In einer üblichen Form einer Pressmatrize werden sukzessive die einzelnen Materialien eingebracht, so dass sich folgende Schichtabfolge ergibt:

| | |
|---|---|
| 1. Schicht: | Hauptschicht, Material A |
| 2. Schicht: | Zwischenschicht, Material B |
| 3. Schicht: | Zwischenschicht, Material A |
| 4. Schicht: | Hauptschicht, Material B |
| 5. Schicht: | Zwischenschicht, Material C |
| 6. Schicht: | Zwischenschicht, Material B |
| 7. Schicht: | Hauptschicht, Material C |
| 7. Schicht: | Zwischenschicht, Material D |
| 9. Schicht: | Zwischenschicht, Material C |
| 10. Schicht: | Hauptschicht, Material D |

Nach dem Befüllen der Pressmatrize mit den einzelnen Schichten wird in bekannter Weise durch Trockenpressen der Grünling und anschließend durch Entbindern und Sintern ein verarbeitungsfähiger Formkörper mit einer Gesamthöhe von etwa 10 bis 15 mm hergestellt.

In dem so erhaltenen Formkörper haben die Zwischenschichten eine Schichtdicke von etwa 0,2 bis etwa 0,4 mm. Bei diesem Formkörper und in einer daraus hergestellten Dentalrestauration sind die Übergänge zwischen den einzelnen Schichten mit bloßem Auge überraschenderweise nicht wahrnehmbar.

### Beispiel 2 - Zwei Zwischenschichten

Für die Herstellung eines mehrfarbigen Formkörpers aus grundsätzlich unterschiedlich eingefärbten Schichten werden nachstehende Materialien (Glaskeramik-Pulver) verwendet:

| | |
|---|---|
| SiO₂: | 60, 0 - 65,0 % |
| Al₂O₃: | 16,0 - 20,0 % |
| K₂O: | 10,0 - 14,0 % |
| Na₂O: | 3,5 - 6,5 % |
| B₂O₃: | 0 - 1,0 % |
| BaO: | 0 - 1,5 % |
| CaO: | 0,5 - 2,5 % |
| CeO₂: | 0 - 1,0 % |
| TiO₂: | 0 - 0,5 % |
| F: | 0 - 0,5 % |
| Pigmente: | 0,2 - 1,0 % |

Durch entsprechende Pigmentzugabe werden die Einfärbungen M1 und M2 des Glaskeramikmaterials hergestellt, wobei M1 zum Beispiel der Dentinfarbe A2 nach Vitanpan classical® entspricht und eine hohe Opazität aufweist, während M2 einer Schneidefarbe entspricht, und eine niedrigere Opazität aufweist. Durch unterschiedliche Abmischung der Materialien M1 und M2 ergeben sich vier unterschiedlich gefärbte Materialzusammensetzungen A bis D und daraus wiederum sechs unterschiedlich eingefärbte Materialien der Zwischenschichten AB1, AB2, BC1, BC2, CD1, CD2:

| | |
|---|---|
| Material A: | 100% M1 |
| Material B: | 2/3 M1, 1/3 M2 |
| Material C: | 1/3 M1, 2/3 M2 |
| Material D: | 100% M2 |
| | |
| Material AB1: | 1/3 A, 2/3 B |
| Material AB2: | 2/3 A, 1/3 B |
| Material BC1: | 1/3 B, 2/3 C |
| Material BC2: | 2/3 B, 1/3 C |
| Material CD1: | 1/3 C, 2/3 D |
| Material CD2: | 2/3 C, 1/3 D |

In einer üblichen Form einer Pressmatrize werden sukzessive die einzelnen Materialien eingebracht, so dass sich folgende Schichtabfolge ergibt:

| | |
|---|---|
| 1. Schicht: | Hauptschicht Material A |
| 2. Schicht | Zwischenschicht Material AB1 |
| 3. Schicht | Zwischenschicht Material AB2 |
| 4. Schicht | Hauptschicht Material B |
| 5. Schicht | Zwischenschicht Material BC1 |
| 6. Schicht | Zwischenschicht Material BC2 |
| 7. Schicht | Hauptschicht Material C |
| 8. Schicht | Zwischenschicht Material CD1 |
| 9. Schicht | Zwischenschicht Material CD2 |
| 10. Schicht | Hauptschicht Material D |

Nach dem Befüllen der Pressmatrize mit den einzelnen Schichten wird in bekannter Weise durch Trockenpressen der Grünling und anschließend durch Entbindern und Sintern ein verarbeitungsfähiger Formkörper mit einer Gesamthöhe von etwa 10 bis 15 mm hergestellt.

In dem so erhaltenen Formkörper haben die Zwischenschichten eine Schichtdicke von etwa 0,2 bis etwa 0,4 mm. Bei diesem Formkörper und in einer daraus hergestellten Dentalrestauration sind die Übergänge zwischen den einzelnen Schichten mit bloßem Auge überraschenderweise nicht wahrnehmbar.

### Beispiel 3 - Eine Zwischenschicht

Für die Herstellung eines mehrfarbigen Formkörpers aus grundsätzlich unterschiedlich eingefärbten Schichten werden nachstehende Materialien (Glaskeramik-Pulver) verwendet:

| | |
|---|---|
| SiO₂: | 60,0 - 65,0 % |
| Al₂O₃: | 16,0 - 20,0 % |
| K₂O: | 10,0 - 14,0 % |
| Na₂O: | 3,5 - 6,5 % |
| B₂O₃: | 0 - 1,0 % |
| BaO: | 0 - 1,5 % |
| CaO: | 0,5 - 2,5 % |
| CeO₂: | 0 - 1,0 % |
| TiO₂: | 0 - 0,5 % |
| F: | 0 - 0,5 % |
| Pigmente: | 0,2 - 1,0 % |

Durch entsprechende Pigmentzugabe werden die Einfärbungen M1 und M2 des Glaskeramikmaterials hergestellt, wobei M1 zum Beispiel der Dentinfarbe A2 nach Vitanpan classical® entspricht und eine hohe Opazität aufweist, während M2 einer Schneidefarbe entspricht, und eine niedrigere Opazität aufweist. Durch unterschiedliche Abmischung der Materialien M1 und M2 ergeben sich vier unterschiedlich gefärbte Materialzusammensetzungen A bis D und daraus wiederum drei unterschiedlich eingefärbte Materialien der Zwischenschichten AB, BC, CD:

| | |
|---|---|
| Material A: | 100% M1 |
| Material B: | 2/3 M1, 1/3 M2 |
| Material C: | 1/3 M1, 2/3 M2 |
| Material D: | 100% M2 |
| | |
| Material AB: | 50% A, 50% B |
| Material BC: | 50% B, 50% C |
| Material CD: | 50% C, 50% D |

In einer üblichen Form einer Pressmatrize werden sukzessive die einzelnen Materialien eingebracht, so dass sich folgende Schichtabfolge ergibt:

| | |
|---|---|
| 1. Schicht: | Hauptschicht Material A |
| 2. Schicht | Zwischenschicht Material AB |
| 3. Schicht | Hauptschicht Material B |
| 4. Schicht | Zwischenschicht Material BC |
| 5. Schicht | Hauptschicht Material C |
| 6. Schicht | Zwischenschicht Material CD |
| 7. Schicht | Hauptschicht Material D |

Nach dem Befüllen der Pressmatrize mit den einzelnen Schichten wird in bekannter Weise durch Trockenpressen der Grünling und anschließend durch Entbindern und Sintern ein verarbeitungsfähiger Formkörper mit einer Gesamthöhe von etwa 10 bis 15 mm hergestellt.

In dem so erhaltenen Formkörper haben die Zwischenschichten eine Schichtdicke von etwa 0,2 bis etwa 0,4 mm. Bei diesem Formkörper und in einer daraus hergestellten Dentalrestauration sind die Übergänge zwischen den einzelnen Schichten mit bloßem Auge überraschenderweise nicht wahrnehmbar.

## Patentansprüche

1. Mehrfarbiger Formkörper mit aufeinander gelagerten Schichten zur Herausarbeitung von Dentalrestaurationen, der
(a) mindestens zwei aufeinander folgende und unterschiedlich gefärbte Hauptschichten und
(b) zwischen mindestens zwei aufeinander folgenden und unterschiedlich gefärbten Hauptschichten mindestens zwei unterschiedlich gefärbte Zwischenschichten aufweist,
wobei die Hauptschichten eine Dicke von mehr als 0,5 mm haben und die Zwischenschichten eine Dicke von 0,1 mm bis 0,5 mm haben und wobei zwischen den Zwischenschichten eine Änderung der Farbe in einer Richtung erfolgt, die der Richtung der Änderung der Farbe zwischen den Hauptschichten entgegengesetzt ist.

2. Mehrfarbiger Formkörper nach Anspruch 1, wobei die Änderung der Farben im Wesentlichen in einer Änderung ihrer jeweiligen Helligkeit besteht.

3. Mehrfarbiger Formkörper nach einem der Ansprüche 1 oder 2, wobei zwischen den Zwischenschichten eine Zunahme der Helligkeit in einer Richtung erfolgt, die der Richtung der Zunahme der Helligkeit zwischen den Hauptschichten entgegengesetzt ist.

4. Mehrfarbiger Formkörper nach einem der vorhergehenden Ansprüche, wobei die zwischen zwei aufeinander folgenden und unterschiedlich gefärbten-Hauptschichten liegenden Zwischenschichten alternierend die Farben dieser Hauptschichten haben.

5. Mehrfarbiger Formkörper nach einem der vorhergehenden Ansprüche, wobei zwischen zwei aufeinander folgenden und unterschiedlich gefärbten Hauptschichten zwei Zwischenschichten angeordnet sind und jede dieser Zwischenschichten die Farbe der Hauptschicht hat, die an die jeweils andere Zwischenschicht angrenzt.

6. Mehrfarbiger Formkörper nach einem der vorhergehenden Ansprüche, der mindestens ein Element von vier aufeinander gelagerten Schichten aufweist, wobei
(a) die erste Schicht eine erste Hauptschicht;
(b) die zweite Schicht eine Zwischenschicht mit der Farbe der zweiten Hauptschicht;
(c) die dritte Schicht eine Zwischenschicht mit der Farbe der ersten Hauptschicht; und
(d) die vierte Schicht eine zweite Hauptschicht ist.

7. Mehrfarbiger Formkörper nach einem der vorhergehenden Ansprüche, der 4 bis 20, bevorzugt 4 bis 10, besonders bevorzugt 4 bis 8 Haupt- und Zwischenschichten aufweist.

8. Mehrfarbiger Formkörper nach einem der vorhergehenden Ansprüche, der acht aufeinander gelagerte Schichten aufweist, wobei
(a) die erste Schicht eine erste Hauptschicht;
(b) die zweite Schicht eine zweite Hauptschicht;
(c) die dritte Schicht eine Zwischenschicht mit der Farbe der dritten Hauptschicht;
(d) die vierte Schicht eine Zwischenschicht mit der Farbe der zweiten Hauptschicht;
(e) die fünfte Schicht eine dritte Hauptschicht;
(f) die sechste Schicht eine Zwischenschicht mit der Farbe der vierten Hauptschicht;
(g) die siebte Schicht eine Zwischenschicht mit der Farbe der dritten Hauptschicht; und
(h) die achte Schicht eine vierte Hauptschicht ist.

9. Mehrfarbiger Formkörper nach einem der vorhergehenden Ansprüche, wobei die Hauptschichten eine Dicke von mehr als 0,5 mm und bis 15 mm, bevorzugt mehr als 0,5 mm und bis 10 mm und besonders bevorzugt 0,7 mm bis 8 mm haben.

10. Mehrfarbiger Formkörper nach einem der vorhergehenden Ansprüche, wobei die Zwischenschichten eine Dicke von 0,2 mm bis 0,4 mm haben.

11. Mehrfarbiger Formkörper nach einem der vorhergehenden Ansprüche auf der Basis von Keramik, Glaskeramik, Kunststoff, anorganisch-organischem Komposit oder Mischungen daraus.

12. Mehrfarbiger Formkörper nach einem der vorhergehenden Ansprüche, der
(a) SiO₂;
(b) Al₂O₃; und
(c) K₂O und/oder Na₂O
enthält.

13. Mehrfarbiger Formkörper mit aufeinander gelagerten Schichten zur Herausarbeitung von Dentalrestaurationen, der
(a) mindestens zwei aufeinander folgende und unterschiedlich gefärbte Hauptschichten und
(b) zwischen mindestens zwei aufeinander folgenden und unterschiedlich gefärbten Hauptschichten eine Zwischenschicht aufweist,
wobei die Hauptschichten eine Dicke von mehr als 0,5 mm haben und die Zwischenschicht eine Dicke von 0,1 mm bis 0,5 mm hat und wobei die Zwischenschicht eine Mischung der Materialien der beiden aufeinander folgenden Hauptschichten enthält.

14. Mehrfarbiger Formkörper nach Anspruch 13, wobei die Hauptschichten eine Dicke von mehr als 0,5 mm und bis 15 mm, bevorzugt mehr als 0,5 mm und bis 10 mm und besonders bevorzugt 0,7 mm bis 8 mm haben.

15. Mehrfarbiger Formkörper nach einem der Ansprüche 13 und 14, wobei die Zwischenschicht eine Dicke von 0,1 mm bis 0,5 mm und besonders bevorzugt 0,2 mm bis 0,4 mm hat.

16. Verfahren zur Herstellung eines mehrfarbigen Formkörpers nach einem der Ansprüche 1 bis 15, umfassend die Schritte
(a) Aufeinanderlagern der Hauptschichten und Zwischenschicht (en),
(b) Trockenpressen und
(c) Entbindern und Sintern,
wobei die Hauptschichten und die Zwischenschicht (en) so aufeinander gelagert werden, dass ein Formkörper nach einem der Ansprüche 1 bis 15 erhalten wird.

17. Verwendung eines mehrfarbigen Formkörpers nach einem der Ansprüche 1 bis 15 zur Herstellung dentaler Restaurationen.

18. Verwendung nach Anspruch 17, bei der die dentalen Restauratiopen künstliche Zähne, Inlays, Onlays, Brücken oder Kronen sind.

19. Verwendung nach einem der Ansprüche 17 oder 18, wobei die Herstellung der dentalen Restaurationen computergestützt, insbesondere mittels CAD/CAM-Verfahren, durchgeführt wird.

## Claims

1. Multi-colored shaped body having layers arranged one upon the other for working out dental restorations which comprises
(a) at least two successive and differently colored main layers and
(b) at least two differently colored intermediate layers between at least two successive and differently colored main layers,
wherein the main layers have a thickness of more than 0.5 mm and the intermediate layers have a thickness of 0.1 mm to 0.5 mm and wherein a change in color between the intermediate layers takes place in a direction which is contrary to the direction of the change in color between the main layers.

2. Multi-colored shaped body according to claim 1, wherein the change in colors is essentially a change in their respective brightness.

3. Multi-colored shaped body according to any one of claims 1 or 2, wherein an increase in brightness between the intermediate layers takes place in a direction which is contrary to the direction of the increase in brightness between the main layers.

4. Multi-colored shaped body according to any one of the preceding claims, wherein the intermediate layers lying between two successive and differently colored main layers alternately have the colors of these main layers.

5. Multi-colored shaped body according to any one of the preceding claims, wherein between two successive and differently colored main layers two intermediate layers are arranged and each of these intermediate layers has the color of the main layer which is adjacent to the respective other intermediate layer.

6. Multi-colored shaped body according to any one of the preceding claims, which has at least one element of four layers arranged one upon the other, wherein
(a) the first layer is a first main layer;
(b) the second layer is an intermediate layer having the color of the second main layer;
(c) the third layer is an intermediate layer having the color of the first main layer;
(d) the fourth layer is a second main layer.

7. Multi-colored shaped body according to any one of the preceding claims which has 4 to 20, preferably 4 to 10, more preferably 4 to 8 main and intermediate layers.

8. Multi-colored shaped body according to any one of the preceding claims, which has eight layers arranged one upon the other, wherein
(a) the first layer is a first main layer;
(b) the second layer is a second main layer.
(c) the third layer is an intermediate layer having the color of the third main layer;
(d) the fourth layer is an intermediate layer having the color of the second main layer;
(e) the fifth layer is a third main layer;
(f) the sixth layer is an intermediate layer having the color of the fourth main layer;
(g) the seventh layer is an intermediate layer having the color of the third main layer; and
(h) the eighth layer is a fourth main layer.

9. Multi-colored shaped body according to any one of the preceding claims, wherein the main layers have a thickness of more than 0.5 mm and up to 15 mm, preferably more than 0.5 mm and up to 10 mm and more preferably 0.7 mm to 8 mm.

10. Multi-colored shaped body according to any one of the preceding claims, wherein the intermediate layers have a thickness of 0.2 mm to 0.4 mm.

11. Multi-colored shaped body according to any one of the preceding claims based on ceramic, glass ceramic, inorganic-organic composite or mixtures thereof.

12. Multi-colored shaped body according to any one of the preceding claims which comprises
(a) SiO₂;
(b) Al₂O₃; and
(c) K₂O and/or Na₂O.

13. Multi-colored shaped body having layers arranged one upon the other for working out dental restorations which comprises
(a) at least two successive and differently colored main layers and
(b) an intermediate layer between at least two successive and differently colored main layers,
wherein the main layers have a thickness of more than 0.5 mm and the intermediate layer has a thickness of 0.1 mm to 0.5 mm and wherein the intermediate layer comprises a mixture of the materials of the two successive main layers.

14. Multi-colored shaped body according to claim 13, wherein the main layers have a thickness of more than 0.5 mm and up to 15 mm, preferably more than 0.5 mm and up to 10 mm and more preferably 0.7 mm to 8 mm.

15. Multi-colored shaped body according to any one of claims 13 and 14, wherein the intermediate layer has a thickness of 0.1 mm to 0.5 mm and more preferably 0.2 mm to 0.4 mm.

16. Process for manufacturing a multi-colored shaped body according to any one of claims 1 to 15, which comprises the steps of
(a) arranging the main layers and intermediate layer(s)
(b) dry pressing, and
(c) debindering and sintering,
wherein the main layers and the intermediate layer(s) are arranged one upon the other such that a shaped body according to any one of claims 1 to 15 is obtained.

17. Use of a multi-colored shaped body according to any one of claims 1 to 15 for the manufacture of dental restorations.

18. Use according to claim 17, wherein the dental restorations are artificial teeth, inlays, onlays, bridges or crowns.

19. Use according to any one of claims 17 or 18, wherein the manufacture of the dental restorations is computer-aided, in particular by means of CAD/CAM methods.

## Revendications

1. Corps façonné multicolore à couches superposées les unes sur les autres, conçu pour la fabrication de pièces de restauration dentaire et comportant :
a) au moins deux couches principales superposées successives, de couleurs différentes,
b) et au moins deux couches intermédiaires de couleurs différentes, situées entre au moins deux couches principales superposées successives et de couleurs différentes,
dans lequel les couches principales ont plus de 0,5 mm d'épaisseur et les couches intermédiaires ont de 0,1 à 0,5 mm d'épaisseur, et dans lequel, entre les couches intermédiaires, la couleur varie en sens inverse du sens de variation de la couleur entre les couches principales.

2. Corps façonné multicolore conforme à la revendication 1, dans lequel la variation des couleurs consiste essentiellement en une variation de leur clarté respective.

3. Corps façonné multicolore conforme à l'une des revendications 1 et 2, dans lequel il y a, entre les couches intermédiaires, augmentation de la clarté dans la direction opposée à celle dans laquelle il y a augmentation de la clarté entre les couches principales.

4. Corps façonné multicolore conforme à l'une des revendications précédentes, dans lequel les couches intermédiaires situées entre deux couches principales superposées successives et de couleurs différentes présentent en alternance les couleurs de ces couches principales.

5. Corps façonné multicolore conforme à l'une des revendications précédentes, dans lequel sont disposées, entre deux couches principales superposées successives et de couleurs différentes, deux couches intermédiaires dont chacune présente la couleur de la couche principale adjacente à l'autre couche intermédiaire.

6. Corps façonné multicolore conforme à l'une des revendications précédentes, qui comporte au moins un élément de quatre couches superposées, dans lequel :
a) la première couche est une première couche principale,
b) la deuxième couche est une couche intermédiaire présentant la couleur de la deuxième couche principale,
c) la troisième couche est une couche intermédiaire présentant la couleur de la première couche principale,
d) et la quatrième couche est une deuxième couche principale.

7. Corps façonné multicolore conforme à l'une des revendications précédentes, qui comporte 4 à 20, de préférence 4 à 10 et en particulier 4 à 8 couches, principales et intermédiaires.

8. Corps façonné multicolore conforme à l'une des revendications précédentes, qui comporte huit couches disposées l'une sur l'autre et dans lequel
a) la première couche est une première couche principale,
b) la deuxième couche est une deuxième couche principale,
c) la troisième couche est une couche intermédiaire présentant la couleur de la troisième couche principale,
d) la quatrième couche est une couche intermédiaire présentant la couleur de la deuxième couche principale,
e) la cinquième couche est une troisième couche principale,
f) la sixième couche est une couche intermédiaire présentant la couleur de la quatrième couche principale,
g) la septième couche est une couche intermédiaire présentant la couleur de la troisième couche principale,
h) et la huitième couche est une quatrième couche principale.

9. Corps façonné multicolore conforme à l'une des revendications précédentes, dans lequel les couches principales sont épaisses de plus de 0,5 mm à 15 mm, de préférence de plus de 0,5 mm à 10 mm, et mieux encore de 0,7 mm à 8 mm.

10. Corps façonné multicolore conforme à l'une des revendications précédentes, dans lequel les couches intermédiaires ont de 0,2 à 0,4 mm d'épaisseur.

11. Corps façonné multicolore conforme à l'une des revendications précédentes, à base de céramique, de vitrocéramique, de matériau synthétique, de composite organique/inorganique, ou d'un mélange de tels matériaux.

12. Corps façonné multicolore conforme à l'une des revendications précédentes, qui contient :
a) de la silice SiO₂,
b) de l'alumine Al₂O₃,
c) et de l'oxyde de potassium K₂O et/ou de l'oxyde de sodium Na₂O.

13. Corps façonné multicolore à couches superposées, conçu pour la fabrication de pièces de restauration dentaire et comportant :
a) au moins deux couches principales superposées successives, de couleurs différentes,
b) et une couche intermédiaire, située entre au moins deux couches principales superposées successives de couleurs différentes,
dans lequel les couches principales ont plus de 0,5 mm d'épaisseur et la couche intermédiaire a de 0,1 à 0,5 mm d'épaisseur, et dans lequel la couche intermédiaire contient un mélange des matériaux des deux couches principales superposées successives.

14. Corps façonné multicolore conforme à la revendication 13, dans lequel les couches principales sont épaisses de plus de 0,5 mm à 15 mm, de préférence de plus de 0,5 mm à 10 mm, et mieux encore de 0,7 mm à 8 mm.

15. Corps façonné multicolore conforme à l'une des revendications 13 et 14, dans lequel les couches intermédiaires ont de 0,1 à 0,5 mm et de préférence de 0,2 à 0,4 mm d'épaisseur.

16. Procédé de fabrication d'un corps façonné multicolore conforme à l'une des revendications 1 à 15, lequel procédé comporte les étapes suivantes :
a) superposition de couches principales et d'une ou de couche(s) intermédiaire(s) ;
b) compression à sec ;
c) et élimination de liant et frittage ;
et dans lequel on superpose les couches principales et la ou les couche(s) intermédiaire(s) de telle sorte que l'on obtient un corps façonné conforme à l'une des revendications 1 à 15.

17. Utilisation d'un corps façonné multicolore conforme à l'une des revendications 1 à 15 en vue de la fabrication de pièces de restauration dentaire.

18. Utilisation conforme à la revendication 17, les pièces de restauration dentaire étant des dents artificielles, des inlays, des onlays, des bridges ou des couronnes.

19. Utilisation conforme à la revendication 17 ou 18, la fabrication des pièces de restauration dentaire étant réalisée en mode assisté par ordinateur, en particulier selon une procédure CAO/FAO.
